# EUROPEAN PATENT SPECIFICATION

(11) **EP 2 414 088 B1**
(45) Date of publication and mention of the grant of the patent: **16.01.2019**
(21) Application number: 10708676.1
(22) Date of filing: 05.03.2010
(51) Int. Cl.: B01D 71/26, H01M 2/16

(54) **MICROPOROUS MEMBRANES AND BATTERY SEPARATOR COMPRISING SUCH MEMBRANES**
MIKROPORÖSE MEMBRANEN UND BATTERIETRENNFILME ENTHALTEND DIESE MEMBRANEN
Membranes microporeuses et films séparateurs de batterie comprenant de telles membranes

(30) Priority: 30.03.2009 US 164817 P; 24.06.2009 US 220094 P; 25.05.2009 EP 09160964; 30.03.2009 US 164824 P; 25.05.2009 EP 09160966; 19.08.2009 EP 09168194; 30.03.2009 US 164833 P; 25.05.2009 EP 09160967; 25.06.2009 EP 09163698; 25.05.2009 EP 09160965; 30.03.2009 US 164827 P; 11.05.2009 US 177060 P
(43) Date of publication of application: 08.02.2012
(73) Proprietor: Toray Industries, Inc., Chuo-ku Tokyo (JP)
(72) Inventor: ISHIHARA, Takeshi, 1190-13, Iguchi, Nasushiobara-shi Tochigi-ken, 329-2763 (JP); MIYAOKA, Satoshi, 1190-13, Iguchi, Nasushiobara-shi Tochigi-ken, 329-2763 (JP); KONO, Koichi, 1190-13, Iguchi, Nasushiobara-shi Tochigi-ken, 329-2763 (JP); CROWTHER, Donna, J., Seabrook TX 77586 (US); BRANT, Patrick, Seabrook TX 77586 (US)
(74) Representative: Webster, Jeremy Mark
(86) International application number: PCT/US2010/026425
(87) International publication number: WO 2010/114674

(56) References cited:
- EP-A1- 1 947 138
- EP-A1- 1 956 040
- JP-A- 2002 128 942
- US-A1- 2008 057 388

## Description

### FIELD OF THE INVENTION

The invention relates to thermally-stable microporous membranes comprising polyolefin, and battery separator films incorporating such microporous membranes.

### BACKGROUND OF THE INVENTION

Microporous membranes can be used as separation membranes, such as battery separators and electrolytic capacitor separators, etc. A lithium-ion battery contains an anode, a cathode, an aprotic polar organic solvent as an electrolyte solvent, a lithium salt as an electrolyte, and a battery separator located between the anode and the cathode. One common battery separator is a battery separator film comprising polyolefin, such as a microporous membrane or a non-woven film. Battery separator film comprising polyolefin, e.g., polyethylene and/or polypropylene, is desirable because the polyolefin is insoluble in the organic solvent, and reacts with neither the electrolyte nor the electrodes.

Recently, a microporous membrane having a high strength and high modulus by using an ultra-high-molecular-weight polyolefin has been developed. For example, JP60-242035A discloses a membrane produced by molding a gel-like sheet, which is extruded from a solution containing solvent and polyolefin having an average molecular weight ≥ 7 × 10⁵. The gel-like sheet is then stretched and the solvent is removed to produce the membrane. JP03-064334A discloses a microporous membrane having a specific polyolefin molecular weight distribution in order to produce the microporous membrane from a highly concentrated polyolefin solution.

For microporous membranes used as battery separator film, it is desirable for the pores of the microporous membrane to close automatically at elevated temperatures as might be encountered under overcharge or short-circuiting conditions. This property, called "shutdown", results from molten polymer closing the membrane's micropores. It is desired that shutdown occur at a temperature lower than that at which the membrane loses structural integrity (the "meltdown" temperature). Increasing both the difference between the shutdown and meltdown temperatures and the speed at which the membrane's pores close at temperatures above the shutdown temperature (the shutdown speed) improves the battery's safety margin. Shutdown temperatures ≤ 130°C are desired. Using branched low density polyethylene (LDPE) (and/or) a linear low density polyethylene (LLDPE) to lower the membrane's shutdown temperature has been disclosed in JP60-023954A, JP03-201360A and JP05-025305A.

JP11-269289A discloses a polyethylene microporous membrane having improved (lower) shutdown temperature. The membrane comprises 20 to 98 wt.% of polyethylene having a weight average weight molecular weight ≥ 5 × 10⁵ and 2 to 80 wt.% of an ethylene-alpha-olefin copolymer having a melting point of 95°C to 125°C and a substantially linear structure. JP2002-338730A discloses a polyethylene microporous membrane comprising a high density polyethylene (HDPE) having a viscosity average molecular weight in the range of 1 × 10⁵ to 4 × 10⁶ and a polyethylene (PE) having a melting point in the range of from 125°C to 132°C. The PE can be an ethylene-alpha-olefin copolymer, the alpha-olefin being an olefin having 4 carbons or more.

WO2007/060990 and WO2007/060991 disclose microporous membranes containing polyethylene produced using a single-site catalyst. The references disclose membranes having improved heat shrinkage, i.e., a reduced tendency for the membrane to shrink in a planar direction at elevated temperature. Since electrode spacing in lithium ion batteries is very small (a fraction of a millimeter), separator heat shrinkage can result in direct electrode contact (short circuit). The references also disclose membranes having improved shutdown temperature, but neither discloses membranes having a shutdown temperature ≤130°C.

US Patent Application No. US 2008/0057388 discloses a multi-layer microporous polyolefin membrane comprising a first porous layer of a polyethylene, and a second porous layer comprising a polyethylene and polypropylene, wherein the polypropylene has a weight-average molecular weight of 6 x 10⁵ or more and a fraction of polypropylene molecules having a molecular weight of 1.8 x 10⁶ or more is 10% or more by mass.

European Patent Application No. EP 1947138 discloses a microporous membrane comprising polyethylene as a main component, the membrane having (a) a shutdown temperature of 135°C or lower, at which the air permeability measured while heating at a temperature-elevating speed of 5°C/minute reaches 1 x 10⁵ sec/100 cm³, (b) an air permeability change ratio of 1 x 10⁴ sec/100 cm³/°C or more (which is a gradient of a curve representing the dependency of the air permeability on a temperature at 1 x 10⁴ sec/100 cm³), and (c) a meltdown temperature of 150°C or higher, at which the air permeability measured while further heating after reaching the above shutdown temperature becomes 1 x 10⁵ sec/100 cm³ again.

JP2002-128942A discloses polyolefin microporous films comprising a polyolefin composition (A) comprising as essential ingredients a polyolefin (A1) having a weight-average molecular weight of at least 5 × 10⁵ and a polyolefin (A2) having a weight-average molecular weight of at least 1 × 10⁴ and less than 5 × 10⁵, where the polyolefin (A2) is a linear polyolefin having a weight-average molecular weight/number-average molecular weight ratio of at least 1 and less than 10.

While improvements have been made in battery separator film shutdown performance, further improvements are desired. It is particularly desired to produce a battery separator film having a shutdown temperature ≤ 130°C with low heat shrinkage.

### SUMMARY OF THE INVENTION

In an embodiment, this invention relates to a microporous membrane comprising a first polyethylene in an amount in the range of from 5 wt.% to 40 wt.% having an Mw ≥ 1.0 × 10⁶; a second polyethylene in an amount in the range of from 5 wt.% to 90 wt.% having an Mw in the range of 1.0 × 10⁵ to 0.95 × 10⁶, a Tm > 127.0°C and a terminal vinyl group content ≤ 0.20 per 10,000 carbons; and a third polyethylene in an amount in the range of from 5 wt.% to 30 wt.% being an ethylene-alpha-olefin copolymer having an Mw in the range of 1.0 × 10⁴ to 5.0 × 10⁵ and having a Tm in the range of 115.0°C to 127.0°C; the weight percentages being based on the weight of the membrane, wherein the membrane has a shutdown temperature ≤ 130.0°C, a shutdown speed ≥ 10000.0 sec/100cm³/°C and a maximum solid state heat shrinkage ≤ 30.0%; the shutdown temperature, shutdown speed and maximum solid state heat shrinkage being determined according to the procedures set out below.

In an embodiment, the microporous membrane has
a shutdown temperature in the range of from 120.0°C to 130.0°C, a maximum solid state heat shrinkage ≤ 30.0%, a shut-down speed ≥ 10000.0 sec/100cm³/°C, and a pin puncture strength ≥ 5N/25µm. Hereinafter, this embodiment is referred to as the "first embodiment."

In an embodiment, the microporous membrane has
a shutdown temperature in the range of from 120.0°C to 130.0°C, a maximum solid state heat shrinkage ≤ 30.0%, an air permeability in the range of 50.0 sec/100cm³/20µm to 500.0 sec/100cm³/20µm, and a pin puncture strength ≥ 5.0 N/25µm. Hereinafter, this embodiment is referred to as the "second embodiment."

The microporous membrane as defined in claim 1 can be produced by a method
comprising:
(a) extruding a mixture of polymer and diluent,
(b) stretching the extrudate,
(c) removing at least a portion of the diluent from the stretched extrudate,
(d) stretching the diluent-removed extrudate, and
(e) exposing the stretched, diluent-removed extrudate to an elevated temperature.

For example, the method can comprise:
(1) extruding a mixture of diluent and (A) the first polyethylene, (B) the second polyethylene and (C) the third polyethylene
(2) stretching the extrudate by a first magnification factor ≥ 4 fold in a first planar direction and by a second magnification factor ≥ 4 fold in a second planar direction substantially perpendicular to the first planar direction, the product of the first and second magnification factors being in the range of 20 fold to 60 fold in area,
(3) removing at least a portion of the diluent from the stretched extrudate,
(4) stretching the diluent-removed extrudate by a third magnification factor in the range of 1.5 fold to 2.5 fold in at least one direction while exposing the diluent-removed extrudate to a temperature in the range of 116°C to 125°C, and
(5) reducing the size of the stretched, diluent-removed extrudate in the stretching direction of step (4) to a fourth magnification factor in the range 1.2 fold to 1.5 fold while exposing the stretched, diluent-removed extrudate to a temperature in the range of 116°C to 125°C. In an embodiment, the microporous membrane produced by the process has a shutdown temperature in the range of from 120°C to 130°C, a maximum solid state heat shrinkage ≤ 30.0%, a shut-down speed ≥ 10000.0 sec/100cm³/°C, and a pin puncture strength ≥ 5.0 N/25µm.

The method may comprise:
(1) extruding a mixture of diluent and (A) the first polyethylene, (B) the second polyethylene and (C) the third polyethylene and cooling the extrudate.
(2) stretching the extrudate in at least one direction while exposing the extrudate to a temperature in the range of 20°C to 90°C,
(3) stretching the stretched extrudate in at least one direction while exposed to a temperature in the range of 110°C to 125°C, the stretching of steps (2) and (3) resulting in an area magnification factor in the range of from 20 fold to 60 fold,
(4) removing at least a portion of the diluent from the stretched extrudate,
(5) stretching the diluent-removed extrudate in at least one direction by a first magnification factor in the range of 1.5 fold to 2.5 fold while exposing the diluent-removed extrudate to a temperature in the range of 116°C to 125°C, and then either
(6a) reducing the size of the stretched, diluent-removed extrudate in the stretching direction of step (5) to a second magnification factor in the range 1.2 fold to 1.5 fold while exposing the stretched, diluent-removed extrudate to a temperature in the range of from 116°C to 125°C or
(6b) exposing the stretched, diluent-removed extrudate to a temperature in the range of 116°C to 125°C with no substantial change in the first magnification factor.
In an embodiment, the microporous membrane produced by the process has a shutdown temperature in the range of 120.0°C to 130.0°C, a maximum solid state heat shrinkage ≤ 30.0%, a shutdown speed ≥ 10000.0 sec/100cm³/°C and a pin puncture strength ≥ 5.0 N/25µm.

In another embodiment, this invention relates to a battery separator comprising a microporous membrane as defined in any one of claims 1 to 3.

It is possible to make a battery comprising an anode, a cathode, an electrolyte, and a microporous membrane situated between the anode and the cathode, the microporous membrane being as defined in any one of claims 1 to 4.

### DETAILED DESCRIPTION OF THE INVENTION

The invention is based in part on the discovery that battery separator film comprising a lower-crystallinity polymer and a higher-crystallinity polymer such as a high density polyethylene or an ultra-high molecular weight polyethylene exhibits a relatively low shutdown temperature but with relatively poor heat shrinkage. It has been found that this difficulty can be overcome when the lower-crystallinity polymer comprises polyethylene having a weight average molecular weight ("Mw") in the range of 1.0 × 10⁴ to 5.0 × 10⁵ and a melting peak ("Tm") in the range of 115.0°C to 127.0°C. Microporous membranes produced using such a lower-crystallinity polymer have a shutdown temperature in the range of 120.0°C to 130.0°C and a maximum solid state heat shrinkage ≤ 30.0%. The first and second embodiments will now be described in more detail. While the invention is described in terms of the first and second embodiments, it is not limited thereto, and the description of these embodiments is not meant to foreclose other embodiments within the broader scope of the invention.

### First embodiment

### Polymer resin starting materials

In this embodiment, the microporous membrane is produced from first, second, and third polyethylenes. The first, second, and third polyethylenes can be combined from component polyethylenes or, alternatively, can be a reactor blend.

### The first polyethylene

The first polyethylene has an Mw ≥ 1.0 × 10⁶, e.g., in the range of 1.0 × 10⁶ to 15 × 10⁶, such as 1.1 × 10⁶ to 5 × 10⁶, or 1.1 × 10⁶ to 3 × 10⁶. While not wishing to be bound by any theory or model, it is believed that using the first polyethylene results in a microporous membrane of greater mechanical strength. The microporous membrane contains the first polyethylene in an amount in the range of 5 wt.% to 40 wt.%, such as 5 wt.% to 30 wt.%, based on the weight of the microporous membrane. When the amount of the first polyethylene in the microporous membrane is ≥ 70 wt.%, it can be more difficult to achieve both improved shutdown characteristics (high shutdown speed and low shutdown temperature) and low heat shrinkage. The first polyethylene can be an ultra-high-molecular-weight polyethylene ("UHMWPE"). The first polyethylene can be (i) a homopolymer or (ii) a copolymer of ethylene and a comonomer selected from propylene, butene-1, pentene-1, hexene-1, 4-methylpentene-1, octene-1, vinylacetate, methylmethacrylate, styrene, other monomers, or combinations thereof. When used, the comonomer content in the copolymer is ≤ 10 mol.%. The first polyethylene can be a blend (e.g., a mixture of polyethylenes including mixtures of polyethylene(s) and other polymers such as polyolefin) or a single component. The first polyethylene can be prepared by a single stage polymerization or multi-stage polymerization. Optionally, the first polyethylene has a molecular weight distribution ("MWD" defined as the ratio of weight average molecular weight to number average molecular weight) in the range of 3 to 10.

### The second polyethylene

The second polyethylene has an Mw in the range of 1 × 10⁵ to 0.95 × 10⁶, and has a Tm > 127.0°C. Although it is not critical, the second polyethylene can have an Mw in the range of 1 × 10⁵ to 8 × 10⁵, or 1.5 × 10⁵ to 7.5 × 10⁵. Using the second polyethylene as a starting material results in a polymeric sheet that is easier to mold. It is also believed that the second polyethylene is useful for improving the membrane's shutdown properties. Tm is measured in accordance with JIS K7122 as follows. A sample of the first polyethylene is prepared as a 0.5-mm- thick molding that is melt-pressed at 210°C and then stored for about 24 hours while exposed to a temperature of about 25°C. The sample is then placed in a sample holder of a differential scanning calorimeter (Pyris Diamond DSC available from Perkin Elmer, Inc.) and exposed to a temperature of 25°C in a nitrogen atmosphere. The sample is then exposed to an increasing temperature (the first heating cycle) at a rate of 10°C/minute until a temperature of 230°C is reached. The sample is exposed to the 230°C temperature for 1 minute and then exposed to a decreasing temperature at a rate of 10°C/minute until a temperature of 30°C is reached. The sample is exposed to the 30°C temperature for 1 minute, and is then exposed to an increasing temperature at a rate of 10°C/minute (the second heating cycle) until a temperature of 230°C is reached. The DSC records the amount of heat flowing to the sample during the second heating cycle. Tm is the temperature of the maximum heat flow to the sample as recorded by the DSC in the temperature range of 30°C to 200°C. Polyethylene may show secondary melting peaks adjacent to the principal peak, and/or the end-of-melt transition, but for purposes herein, such secondary melting peaks are considered together as a single melting point, with the highest of these peaks being considered the Tm. The Tm of the second polyethylene is > Tm of the third polyethylene. In one embodiment, the second polyethylene has a linear structure. It is believed that when the second polymer has a linear structure the microporous membrane's mechanical strength is improved. The second polyethylene has a terminal vinyl group content ≤ 0.20 per 10,000 carbon atoms, e.g., ≤ 0.19 per 10,000 carbon atoms. The amount of terminal vinyl group can be measured in accordance with the procedures described in PCT Publication WO97/23554, for example. It is believed that when the second polyethylene's terminal vinyl group content is ≤ 0.20 per 10,000 carbons, it is less difficult to produce a microporous membrane having improved shutdown speed. The amount of the second polyethylene in the microporous membrane is in the range of from 5 wt.% to 90 wt.%, such as 30 wt.% to 90 wt.%, or 40 wt.% to 90 wt.%, based on the weight of the membrane. The second polyethylene can selected from high density polyethylene (HDPE), medium density polyethylene (MDPE), a branched low density polyethylene (LDPE), linear low density polyethylene (LLDPE) or a combination thereof. In one embodiment, the second polyethylene is HDPE. The second polyethylene can be (i) a homopolymer or (ii) a copolymer of ethylene and a comonomer selected from propylene, butene-1, pentene-1, hexene-1, 4-methylpentene-1, octene-1, vinylacetate, methylmethacrylate, styrene, other monomers or combinations thereof. When used, the comonomer content in the copolymer should be ≤ 10 mol.%. The second polyethylene can be a blend (e.g., a mixture of polyethylenes including mixtures of polyethylene(s) and other polymers such as polyolefin) or a single component. In an embodiment, the second polyethylene has an MWD in the range of 3 to 15.

### The third polyethylene

The third polyethylene has an Mw in the range of 1.0 × 10⁴ to 5.0 × 10⁵ and a Tm ≤ 127.0, such as in the range of 115.0°C to 127.0°C. It is believed that using the third polyethylene improves the membrane's shutdown temperature.

Although it is not critical, the third polyethylene can be produced by using a single site catalyst, such as a metallocene catalyst. The third polyethylene can be prepared by methods disclosed in JP58-019309A, JP59-095292A, JP60-035005A, JP60-035006A, JP60-035007A, JP60-035008A, JP60-035009A, JP61-130314A, JP03-163088A, EP0420436A1, US5055438A, and WO91/004257A, for example.

Optionally, the third polyethylene has an Mw in the range of 1 × 10⁴ to 2 × 10⁵, e.g., 2 × 10⁴ to 1 × 10⁵. When the third polyethylene has an Mw in the range of 1 × 10⁴ to 5 × 105, it is easier to produce a microporous membrane having a relatively rapid shutdown speed. In an embodiment, the third polyethylene is a copolymer of ethylene and a comonomer selected from butene-1, hexene-1, octene-1, or combinations thereof. The copolymer's comonomer content can be, e.g., in the range of 1.2 mol.% to 20.0 mol.%, such as 1.2 mol.% to 10 mol.%, or 1.5 mol.% to 8 mol.%. When the comonomer content is < 1.2 mol.%, it can be more difficult to produce a microporous membrane having improved shutdown temperature and improved shutdown speed. When the comonomer content is > 20.0 mol.%, it can be more difficult to produce the microporous membrane having good pin puncture strength. Optionally, the amount of third polyethylene in the microporous membrane is in the range of 5 to 30 wt.%, e.g., 5 to 20 wt.%, such as 10 to 20 wt.%, based in the total amount of the first, second and third polyethylene in the membrane. When the amount of the third polyethylene in the membrane is less < 5wt.%, it can be more difficult to improve the membrane's shutdown temperature. When the content of the third polyethylene is > 30 wt.%, it is less difficult to reduce membrane shutdown temperature, but more difficult to maintain membrane pin puncture strength. Optionally, the third polyethylene has a Tm in the range of 116°C to 125°C. When the Tm of the third polyethylene is > 127.0°C, it can be more difficult to improve shutdown temperature. When the Tm of the third polyethylene is < 115.0°C, it can be more difficult to produce a membrane having sufficiently low heat shrinkage at a higher temperature (e.g., 120°C). Optionally, the third polyethylene has an MWD in the range of 1.5 to 5, or 1.7 to 3. While not wishing to be bound by any theory or model, it is believed that when the third polyethylene's MWD is > 5, it can be more difficult to improve the membrane's shutdown speed.

### A fourth polymer

In one embodiment, the membrane comprises the third polyethylene and a fourth polymer.
The fourth polymer can be polyolefin, such as a polypropylene (PP), polybutene-1 (PB-1), polypentene-1, poly(4-methyl-pentene-1) (PMP), polyhexene-1, polyoctene-1, poly(vinylacetate), polymethyl methacrylate; heat-resistant polymer such as polyester, polyamide, polyarylenesulfide; and mixtures thereof. In an embodiment, the fourth polymer is polyolefin, such as polypropylene. When used, the polypropylene can be a homopolymer or a copolymer of propylene and ≤ 10 mol.% of a comonomer selected from α-olefin, such as ethylene, butene-1, pentene-1, hexene-1, 4-methylpentene-1, octene-1, vinyl acetate, methyl methacrylate, and styrene, etc., and diolefins such as butadiene, 1,5-hexadiene, 1,7-octadiene, 1,9-decadiene, etc.

Mw and MWD of the first, second, and third polyethylenes are determined using a High Temperature Size Exclusion Chromatograph, or "SEC", (GPC PL 220, Polymer Laboratories), equipped with a differential refractive index detector (DRI). The measurement is made in accordance with the procedure disclosed in *"*Macromolecules, Vol. 34, No. 19, pp. 6812-6820 (2001)". Three PLgel Mixed-B columns available from (available from Polymer Laboratories) are used for the Mw and MWD determination. The nominal flow rate is 0.5 cm³/min; the nominal injection volume is 300 µL; and the transfer lines, columns, and the DRI detector are contained in an oven maintained at 145°C.

The GPC solvent used is filtered Aldrich reagent grade 1,2,4-Trichlorobenzene (TCB) containing approximately 1000 ppm of butylated hydroxy toluene (BHT). The TCB is degassed with an online degasser prior to introduction into the SEC. The same solvent is used as the SEC eluent. Polymer solutions were prepared by placing dry polymer in a glass container, adding the desired amount of the TCB solvent, and then heating the mixture at 160°C with continuous agitation for about 2 hours. The concentration of polymer solution is 0.25 to 0.75mg/ml. Sample solution are filtered off-line before injecting to GPC with 2µm filter using a model SP260 Sample Prep Station (available from Polymer Laboratories).

The separation efficiency of the column set is calibrated with a calibration curve generated using a seventeen individual polystyrene standards ranging in Mp ("Mp" being defined as the peak in Mw) from about 580 to about 10,000,000. The polystyrene standards are obtained from Polymer Laboratories (Amherst, MA). A calibration curve (logMp vs. retention volume) is generated by recording the retention volume at the peak in the DRI signal for each PS standard and fitting this data set to a 2nd-order polynomial. Samples are analyzed using IGOR Pro, available from Wave Metrics, Inc.

### Method for producing a microporous membrane

The microporous membrane of the first embodiment can be prepared by:
(1) combining diluent (e.g., a solvent) and the first, second and third polyethylenes to form polymeric mixture (e.g., a polyethylene solution);
(2) extruding the mixture from a die, and cooling the extrudate to form a gel-like sheet;
(3) stretching the gel-like sheet by a first magnification factor ≥ 4 fold in the machine direction ("MD") and a second magnification factor ≥ 4 fold in the transverse direction ("TD"), to achieve an area magnification factor in the range of 20 fold to 60 fold;
(4) removing at least a portion of the diluent from the stretched sheet to form a microporous sheet;
(5) stretching the microporous sheet in at least one direction from a first size to a second size greater than the first size by a third magnification factor in the range of 1.5 fold to 2.5 fold while exposing the microporous sheet to a temperature in the range of 116°C to 125°C; and
(6) reducing the second size to a third size that is less than the second size but greater than the first size by a magnification factor in the range of 1.2 fold to 1.5 fold while exposing the microporous sheet to a the temperature in the range of 116°C to 125°C.

One or more optional steps such as a heat treatment step (7), an cross-linking step with ionizing radiation (8), a hydrophilic treatment step (9), and a surface coating step (10) etc., can be conducted if desired. Such optional steps are disclosed in PCT Publications WO2007/052663A and WO2007/117042A, for example.

The process will now be described in more detail.

### Combining the polymer and diluent

The diluent (such as a solvent) is combined with the first, second, and third polyethylenes and, optionally, the fourth polymer, to form a mixture. When the mixture contains polyethylene and a solvent for the polyethylene the mixture can be called a polyethylene solution. As long as the polymer and diluent can be combined for extrusion, diluent selection is not critical. Melt-blending can be used to combine at least some of the polymer before diluent is added, but this is not required. Optionally, the mixture of polymer and diluent contains various additives such as one or more antioxidant, inorganic materials (such as pore-forming material), etc., provided these are used in a concentration range that does not significantly degrade the desired properties of the microporous membrane. Suitable additives are described in PCT publication WO2008/140835 A1.

The diluent is preferably a solvent that is liquid at room temperature. The
solvent can be at least one of aliphatic, alicyclic or aromatic hydrocarbons such as nonane, decane, decalin, p-xylene, undecane, dodecane, liquid paraffin, etc., mineral oil distillates having boiling points comparable to those of the above hydrocarbons; and phthalates liquid at room temperature such as dibutyl phthalate, dioctyl phthalate, etc. Suitable diluents are described in WO2007/132942 A.

When melt-blending is used for combining the polymer, the melt-blending temperature is not critical. For example, the temperature of the polymeric solution during melt-blending (the melt-blending temperature) can range, e.g., from about 10°C higher than the Tm of the polyethylene having the lowest Tm in the mixture to about 120°C higher than Tm. Such a range can be represented as Tm + 10°C to Tm + 120°C. When
Tm is in the range of about 130°C to about 140°C, the melt-blending temperature can range from about 140°C to about 250°C, or from about 170°C to about 240°C. The diluent can be provided before, after, or during the melt-blending of the polyethylene.

The amount of polymer in the polymer-diluent mixture is not critical. For example, the amount of polymer can be in the range of from about 1 wt.% to about 75 wt.%, based on the weight of the polymer-diluent mixture, for example from about 20 wt.% to about 70 wt.%.

### Extruding the polymer-diluent mixture

The polymer-diluent mixture is extruded from a die to form an extrudate which is then cooled to form a sheet. When the cooled sheet has the appearance of a gel, it can be called a gel-like sheet. The polymer-diluent mixture can be extruded and then conducted directly from a first extruder to the die. The polymer-diluent mixture is generally in the molten state during extrusion, and can be exposed to a temperature in the range of about 140°C to about 250°C during extrusion. The extrudate is typically cooled until the extrudate reaches a temperature ≤ the extrudate's gelation temperature (i.e., the temperature at which the extrudate sheet begins to gel) at a cooling rate of e.g., ≥ about 50°C/minute. Suitable process conditions for accomplishing the extrusion are disclosed in PCT Publication WO 2007/132942.

### Stretching the sheet comprising polymer and diluent

The sheet (i.e., the cooled extrudate) is stretched in at least one direction to form a stretched sheet. Since the sheet comprises polymer and diluent, this can be called "wet stretching" to distinguish it from the stretching conducted later in the process after a portion of the diluent has been removed ("dry stretching"). The choice of stretching method is not critical. The stretching may be accomplished by one or more of tenter stretching, roller stretching or inflation stretching (e.g., with air). Biaxial stretching involves stretching the cooled extrudate in two planar directions, e.g., both the machine direction and transverse direction. In this context, the machine direction ("MD") is a direction in the plane of the film (the cooled extrudate in this instance) which is oriented approximately along the direction of travel as the film is formed, i.e., the longest axis of the film during production. The transverse direction ("TD") also lies in the plane of the film and is approximately perpendicular to both the machine direction and a third axis approximately parallel to the thickness of the film. In the case of biaxial stretching (also called biaxial orientation), the stretching can be simultaneous biaxial stretching, sequential stretching along one axis and then the other or multi-stage stretching (for instance, a combination of the simultaneous biaxial stretching and the sequential stretching). Suitably, simultaneous biaxial stretching is used. It is believed that biaxially stretching the cooled extrudate improves the finished membrane's pin puncture strength.

The cooled extrudate may be exposed to a temperature in the range of about 90°C to 125°C during wet stretching. It is believed that when the wet stretching temperature is > 125°C, it can be more difficult to orient the molecular chains of the polyethylene in the cooled extrudate. And when the wet stretching temperature is < 90°C, it can be more difficult to stretch the cooled extrudate without breakage or tears, which can result in a failure to achieve the desired wet stretching magnification.

When biaxial stretching is used, the linear stretching magnification can be, e.g., at least about 4 fold in at least two approximately perpendicular planar directions, e.g., the MD and TD, to achieve a magnification factor in area in the range of about 20 fold to about 60 fold. It is believed that using a linear stretching magnification factor of ≥ 4 fold and an area magnification factor ≥ about 16 fold produces a microporous membrane having a relatively high pin puncture strength. It is believed that stretching to achieve an area magnification factor of ≤ about 60 fold produces a microporous membrane having a relatively low heat shrinkage. The magnification factor operates multiplicatively on the film size. For example, a film having an initial width (TD) of 2.0 cm that is stretched in TD to a magnification factor of 4 fold will have a final width of 8.0 cm.

Optionally, stretching can be conducted in the presence of a temperature gradient in the extrudate's thickness direction (i.e., a direction approximately perpendicular to the planar surface of the microporous polyolefin membrane). In this case, it can be easier to produce a microporous polyolefin membrane with improved mechanical strength. The details of this method are described in Japanese Patent No. 3347854.

### Diluent removal step

At least a portion of the diluent is removed (or displaced) from the stretched sheet in order to form a microporous sheet. When a second diluent is used for this purpose, it is called a second diluent to distinguish it from the diluent used to produce the polymer-diluent mixture (the first diluent). The second diluent should be soluble in or miscible with the first diluent. See, e.g., PCT Publication No. WO 2008/016174, for example.

Optionally, at least a portion of any remaining volatile species (e.g., a portion of the second diluent) is removed from the stretched sheet after diluent removal. Any method capable of removing the volatile species can be used, including conventional methods such as heat-drying, wind-drying (moving air), etc. Process conditions for removing volatile species such as the second diluent (which can be called a "washing solvent" because it washes away the first diluent) can be the same as those disclosed in PCT Publication No. WO 2008/016174, for example.

### Stretching the microporous sheet

After at least a portion of the first diluent has been removed, the microporous sheet is subjected to stretching during at least 2 stages of heat treatment, i.e., a second stretching treatment followed by a thermal relaxation treatment. The second stretching can be called "dry" stretching or dry orientation since at least a portion of the first diluent is removed before the second stretching begins.

During dry stretching, the microporous sheet is stretched in at least one direction. It is believed that dry stretching results in an improvement in both membrane permeability and pin puncture strength. The dry stretching can be conducted while the microporous sheet is exposed to a temperature in the range of 116.0°C to 125.0°C.

The temperature to which the microporous sheet is exposed during dry stretching affects the properties of the finished membrane. When the membrane is exposed to a temperature < 116.0°C during dry stretching, the resulting membrane can have an undesirably large heat shrinkage. Exposing the membrane to a temperature > 125.0°C during dry stretching, generally results in a loss of membrane air permeability.

The microporous sheet may be stretched in at least one direction from a first size to a second size that is larger than the first size by a linear magnification factor in the range of 1.5 fold to 2.5 fold. The magnification factor achieved during dry stretching affects the properties of the finished membrane. For example, when the linear magnification factor is < 1.5 fold, it is more difficult to produce a microporous membrane having improved air permeability and pin puncture strength. When the linear magnification is > 2.5 fold, it can be more difficult to produce a microporous membrane having improved heat shrinkage (although pin puncture strength does not appear to be adversely affected). Optionally, the dry stretching is conducted to achieve an area magnification in the range of 1.5 fold to 3 fold. Conventional stretching methods can be used for the dry stretching, e.g., one or more of tenter stretching, roller stretching or inflation stretching (e.g., with air). The methods described in Publications No. WO 2008/016174 and WO 2007/132942 can be used, for example.

### Thermal relaxation of the microporous sheet

The size of the microporous sheet along the stretching direction of step (5) is reduced from the second size to a third size that is less than the second size but greater than the first size by a magnification factor in the range of 1.2 fold to 1.5 fold while exposing the microporous sheet to a temperature in the range of 116.0°C to 125.0°C. This step can be called ("thermal relaxation"). The temperature to which the microporous sheet is exposed during the size reduction can affect the properties of the finished membrane. For example, when the microporous sheet is exposed to a temperature < 116.0°C during size reduction, strain concentration in the sheet can lead to worsening heat shrinkage characteristics. When the microporous sheet is exposed to a temperature > 125.0°C, it can be more difficult to produce a membrane having the desired air permeability.

Optionally, thermal relaxation is conducted for a time in the range of 10 seconds to 5 hours, for example. The choice of the thermal relaxation method is not critical. In an embodiment, the thermal relaxation is conducted using a tenter machine, where the distance between opposed tenter clips is gradually reduced in TD. Thermal relaxation produces a finished microporous membrane having low shutdown temperature, fast shutdown speed, high pin puncture strength and low heat shrinkage.

### Second Embodiment

The microporous membrane of the second embodiment will now be described.

### Polymers used to produce the microporous membrane of the second embodiment

The microporous membrane of the second embodiment is produced from first, second and third polyethylenes and optionally a fourth polymer. The first, second, and third polyethylenes and the fourth polymer are the same as those used in the first embodiment.

### Method for producing a microporous membrane

The microporous membrane in the second embodiment can be produced by a method similar to that used to produce the microporous membranes of the first embodiment. The combining step (1) and the extruding step (2) are the same as in the first embodiment. The wet stretching step (3) differs from that of the first embodiment. In the second embodiment, the sheet (the cooled extrudate) is stretched in at least one direction while exposing the sheet to a temperature in the range of 20.0°C to 90.0°C (primary wet stretching). Following primary wet stretching, the stretched sheet is stretched in at least one direction (the same direction or a different direction from the direction of primary stretching) while exposing the sheet to a temperature in the range of 110.0°C to 125.0°C, (secondary wet stretching) in order to achieve an area magnification factor in the range of 20 fold to 60 fold, based on the area of the sheet at the start of primary stretching. The diluent removal, dry stretching, thermal relaxation, and the optional steps are the same as in the first embodiment. A thermal treatment step (heat-setting), where the membrane is exposed to a temperature in the range of 116.0°C to 125.0°C while maintaining the microporous sheet's size substantially constant, can be substituted for the thermal relaxation step as described below.

The primary wet stretching step will now be described in more detail.

### Primary wet stretching step

The primary wet stretching step can be accomplished by one or more of tenter stretching, roller stretching or inflation stretching (e.g., with air). Conventional stretching methods can be used, such as those described in the previously cited PCT Publications. As in production of the first embodiment, the stretching can be along one direction (e.g., a planar direction such as MD or TD) or two directions (e.g., substantially perpendicular planar directions such as MD and TD). When the stretching is biaxial, the stretching can be sequential (first stretching in one direction and then another) or simultaneous.

During primary stretching, the cooled extrudate is exposed to a temperature in the range of 20.0°C to 90.0°C. Temperatures higher than 90.0°C can result in cracking of the gel-like sheet, which can lead to undesirable permeability and pore size in the finished membrane. Temperatures lower than 20.0°C can result in increased sheet tension during stretching, making it more difficult to achieve the desired magnification factor.

Optionally, simultaneous biaxial stretching is used for primary stretching. The cooled extrudate is stretched in substantially perpendicular planar directions, e.g., MD and TD, to a magnification factor of in the range of 1.01 to 5 fold, such as 1.05 to 4 fold in each planar direction. A magnification factor < 1.01 fold can result in a finished membrane having an undesirable pore diameter and permeability. A magnification factor ≥ 5 fold can result in a finished membrane having an undesirably large heat shrinkage. Optionally, the area magnification factor resulting from primary biaxial stretching is in the range of 1.1 to 20 fold, or 1.2 to 16 fold, based on the area of the membrane at the start of primary stretching. Area magnification factors of < 1.1 can result in a finished microporous membrane having undesirable pore diameter and permeability. Area magnification factors > 20 can result in a finished membrane having undesirably large heat shrinkage. Secondary wet stretching is conducted after primary wet stretching, optionally with no intervening processing.

Secondary wet stretching results in an increase in film size to a total area magnification factor in the range of 20 fold to 60 fold. An area magnification factor < 20 fold can result in a finished membrane having undesirable pin puncture strength. An area magnification factor > 60 fold can result in a finished membrane having undesirably large heat shrinkage. The stretching method can be the same as that used in primary stretching, e.g., one or more of tenter stretching, roller stretching, etc.

The membrane is exposed to a temperature in the range of 110.0°C to 125.0°C during secondary wet stretching. When the temperature is > 125.0°C sheet melting can make it more difficult to achieve the desired magnification factor. When the temperature is < 110.0°C, it can be difficult to it can be more difficult to stretch the cooled extrudate evenly.

Optionally, secondary wet stretching is conducted by simultaneously stretching the cooled extrudate in two substantially perpendicular planar directions, each to a magnification factor in the range of 2.0 to 10.0 fold, such as 2.5 to 8 fold. A linear stretching magnification factor < 2.0 fold can result in a finished microporous membrane having an undesirable pin puncture strength. A linear stretching magnification > 10.0 fold can result in a finished microporous membrane having an undesirable heat shrinkage ratio. Optionally, secondary stretching is conducted to achieve an area magnification factor in the range of 2.0 fold to 50.0 fold, such as 2.5 fold to 45 fold.

### Thermal relaxation and/or heat-setting

Following diluent removal, the microporous sheet is subjected to thermal relaxation, heat setting, or both. When thermal relaxation is used, it can be conducted under the same conditions as used in the first embodiment. Suitable heat setting conditions include those described in the previously cited PCT publications. Optionally, the microporous sheet is exposed to a temperature in the range of 116.0°C to 125.0°C during heat setting. Temperatures < 116.0°C can result in undesirable heat shrinkage values in the finished membrane, resulting it is believed from internal strain concentration. Temperatures > 125.0°C can result in a loss of membrane permeability.

### The microporous membrane

The finished microporous membranes have a shutdown temperature in the range of 120.0°C to 130.0°C and a maximum solid state heat shrinkage ≤ 30.0%. In an embodiment, the membrane's thickness is generally in the range of from about 1 µm to about 100 µm, e.g., from about 5 µm to about 30 µm. The thickness of the microporous membrane can be measured by a contact thickness meter at 1 cm longitudinal intervals over the width of 20 cm, and then averaged to yield the membrane thickness. Thickness meters such as the Litematic available from Mitsutoyo Corporation are suitable. Non-contact thickness measurements are also suitable, e.g., optical thickness measurement methods.

The microporous membrane can be a monolayer membrane. In an embodiment, the microporous membrane further comprises a second membrane. The second membrane can be, e.g., a microporous layer.

### Shutdown Temperature

The microporous membrane's shutdown temperature is measured by the method disclosed in PCT publication WO2007/052663.

According to this method, the microporous membrane is exposed to an increasing temperature (5°C/minute beginning at 30°C) while measuring the membrane's air permeability. The microporous membrane's shutdown temperature is defined as the temperature at which the microporous membrane's air permeability first exceeds 100,000 seconds/100cm³. The microporous membrane's air permeability is measured according to JIS P8117 using an air permeability meter (EGO-1T available from Asahi Seiko Co., Ltd.).

In an embodiment, the membrane has a shutdown temperature in the range of 120.0°C to 130.0°C, e.g., in the range of 124°C to 129°C.

### Maximum solid state shrinkage

Microporous membrane's maximum solid state heat shrinkage is measured using a thermomechanical analyzer, (TMA/S S6000 available from Seiko Instruments, Inc.). When TD maximum shrinkage is measured, a rectangular sample of 3 mm x 50 mm is cut out of the microporous membrane such that the long axis of the sample is aligned with TD and the short axis is aligned with MD. When MD maximum shrinkage is measured, the rectangular sample of 3 mm x 50 mm used is cut out of the microporous membrane such that the long axis of the sample is aligned with MD and the short axis is aligned with TD.

The sample is set in the thermomechanical analyzer with the long axis of the sample between the analyzer's chucks. The chuck distance is set to 10 mm, i.e., the distance from the upper chuck to the lower chuck is 10mm. The lower chuck is fixed and a load of 19.6 mN applied to the sample at the upper chuck. The chucks and sample are enclosed in a tube which can be heated to expose the microporous membrane sample to elevated temperature. Starting at 30°C, the temperature inside the tube is increased at a rate of 5°C/minute, and sample length change under the 19.6 mN load is measured at intervals of 0.5 second and recorded as temperature is increased. The maximum solid state heat shrinkage is a ratio defined as the maximum sample length between the chucks measured at 23°C (L1 equal to 10mm) minus the minimum length measured in the range of about 125°C to about 135°C (equal to L2) divided by L1, i.e., [L1-L2]/L1*100%.

In an embodiment, the microporous membrane's maximum TD and MD solid state heat shrinkages are each ≤ 30.0%, such as ≤ 25%. Optionally, the TD maximum solid state heat shrinkage is the range of 5.0% to 30.0%, e.g., 10% to 25%. Optionally, the MD maximum solid state heat shrinkage is in the range of 5.0% to 30.0%, e.g., 10% to 25%.

The final microporous membrane generally comprises the polymer used to produce the extrudate. A small amount of diluent or other species introduced during processing can also be present, generally in amounts less than 1 wt.% based on the weight of the microporous polyolefin membrane. A small amount of polymer molecular weight degradation might occur during processing, but this is acceptable. In an embodiment, molecular weight degradation during processing, if any, causes the value of MWD of the polymer in the membrane to differ from the MWD of the polymer used to produce the membrane by no more than, e.g., about 10%, or no more than about 1%, or no more than about 0.1%.

While the extrudate and the microporous membrane can contain inorganic species (such as species containing silicon and/or aluminum atoms), and/or heat-resistant polymers such as those described in PCT Publications WO 2007/132942 and WO 2008/016174, these are not required. In an embodiment, the extrudate and membrane are substantially free of such materials. Substantially free in this context means the amount of such materials in the microporous membrane is less than 1 wt.%, based on the total weight of the polymer used to produce the extrudate.

The microporous membrane has a shutdown temperature ≤ 130.0°C, a shutdown speed ≥ 10000.0 sec/100cm³/°C and a maximum solid state heat shrinkage ≤ 30.0%, and may have one or more of the other additional properties below.

### Shutdown speed

The microporous membrane has a shutdown speed ≥ 10000 sec/100cm³/°C, for example ≥ 12000 sec/100cm³/°C, such as ≥ 15000 sec/100cm³/°C. In an embodiment, the microporous membrane has a shutdown speed in the range of 10000 sec/100cm³/°C to 50000 sec/100cm³/°C. The shutdown speed is measured as follows. The microporous membrane is exposed to an increasing temperature (5°C/minute beginning at 30°C) while measuring the membrane's air permeability. The microporous membrane's shutdown speed is defined as the gradient of air permeability (Gurley value) as a function of temperature at a Gurley value of 10000 sec/100 cm³ when measured during heating.

### Pin puncture strength

The microporous membrane's pin puncture strength is expressed as the equivalent pin puncture strength for a membrane having a thickness of 25µm. In other words, the measured pin puncture strength of the microporous membrane is normalized to the equivalent value at a membrane thickness of 25µm, and expressed in units of [force/25µm].

Optionally, the microporous membrane's pin puncture strength is ≥ 5 N/25µm, e.g., ≥ 6 N/25µm, such as ≥ 6.2 N/25µm, or ≥ 6.5 N/25µm. In an embodiment, the microporous membrane's pin puncture strength is in the range of 5.0 N/25µm to 10.0 N/25µm. Pin puncture strength is measured as follows. The maximum load is measured when a microporous membrane having a thickness of T₁ is pricked with a needle of 1 mm in diameter with a spherical end surface (radius R of curvature: 0.5mm) at a speed of 2mm/second. The pin puncture strength ("S") is defined using the equation S₂ = 25µm *(S₁)/T₁, where S₁ is the measured pin puncture strength, S₂ is the pin puncture strength normalized to that of an equivalent membrane thickness of 25µm, and T₁ is the average thickness of the membrane.

### Air permeability

Optionally, the microporous membrane has an air permeability ≥ 50.0 sec/100cm³/20µm (Gurley value, normalized to that of an equivalent membrane thickness of 20µm). Since the air permeability value is normalized to that of an equivalent membrane having a film thickness of 20µm, the air permeability value is expressed in units of [seconds/100 cm³/20µ]. In an embodiment, the membrane has an air permeability in the range of 50.0 sec/100cm³/20µm to 500.0 sec/100cm³/20µm. When the microporous membrane's air permeability is < than 50.0 sec/100cm³/20µm, it is more difficult to prevent the formation of lithium dendrites within the microporous membrane when the membrane is used as battery separator film.

Normalized air permeability is measured according to JIS P8117, and the results are normalized to a value at a thickness of 20µm using the equation A = 20µm *(X)/T₁, where X is the measured air permeability of a membrane having an actual thickness T₁ and A is the normalized air permeability at an equivalent membrane thickness of 20µm.

### Porosity

The microporous membrane optionally has a porosity of ≥ 30.0%, such as in the range of 30% to 95%. Porosity is then determined using the formula: Porosity % = 100 x (w2-w1)/w2, wherein "w1" is the actual weight of the microporous membrane and "w2" is the weight of the equivalent non-porous membrane having the same size and thickness.

### A meltdown temperature

The microporous membrane optionally has a meltdown temperature ≥ 145.0°C, such as ≥ 150°C. Meltdown temperature can be measured as follows. A sample of the microporous membrane measuring 5 cm x 5 cm is fastened along its perimeter by sandwiching the sample between metallic blocks each having a circular opening of 12 mm in diameter. The blocks are then positioned so the plane of the membrane is horizontal. A tungsten carbide ball of 10 mm in diameter is placed on the microporous membrane in the circular opening of the upper block. Starting at 30°C, the membrane is then exposed to an increasing temperature at rate of 5°C/minute. The temperature at which the microporous membrane is ruptured by the ball is defined as the membrane's meltdown temperature.

In an embodiment, the membrane has a meltdown temperature in the range of 145°C to 200°C.

### Battery Separator Film

The microporous membranes of the invention are useful as battery separator film in e.g., lithium ion primary and secondary batteries. Such batteries are described in PCT publication WO 2008/016174.

The battery is useful as a power source for one or more electrical or electronic components. Such components include passive components such as resistors, capacitors, inductors, including, e.g., transformers; electromotive devices such as electric motors and electric generators, and electronic devices such as diodes, transistors, and integrated circuits. The components can be connected to the battery in series and/or parallel electrical circuits to form a battery system. The circuits can be connected to the battery directly or indirectly. For example, electricity flowing from the battery can be converted electrochemically (e.g., by a second battery or fuel cell) and/or electromechanically (e.g., by an electric motor operating an electric generator) before the electricity is dissipated or stored in a one or more of the components. The battery system can be used as a power source for powering relatively high power devices such as electric motors in power tools.

Use of the microporous membrane as a battery separator film is not limited to uses
in lithium ion secondary batteries. Because the microporous membrane of this invention has well-balanced properties such as relatively low shutdown temperature, relatively high shutdown speed, relatively high pin puncture strength and relatively low heat shrinkage, the microporous membrane is useful as battery separator film in primary and secondary batteries such as nickel-hydrogen batteries, nickel-cadmium batteries, nickel-zinc batteries, silver-zinc batteries, lithium-ion batteries, lithium-ion polymer batteries. The membrane is also useful for filtration and separation.

### Examples

The following examples further describe embodiments of the invention. The third polyethylene used in the Examples and Comparative Examples below was produced by the method described in PCT publication WO2000/068279A.

At first, we will describe examples of the first embodiment.

### Example 1

100 parts by mass of a polyethylene composition is prepared. The polyethylene composition comprises the first, second, and third polyethylene as described above in the following amounts: 30% by mass of an UHMWPE having an Mw of 1.95 x 10⁶ (the first polyethylene-"component A"), 57% by mass of an HDPE having an Mw of 5.6 x 10⁵, a Tm of 135.0°C, and a terminal vinyl group content of 0.15 per 10000 carbons (the second polyethylene-"component B"), and 13% by mass of an ethylene-octene copolymer (m-PE) having an Mw of 2.0 x 10⁴ (prepared by a single cite catalyst), containing 4.0 mol.% of an octene comonomer, and having a Tm of 120.0°C and an MWD of 2.0 (the third polyethylene-component C). The polyethylene composition is dry-blended with 0.375 parts by mass of tetrakis[methylene-3-(3,5-ditertiary-butyl-4- hydroxyphenyl) -propionate] methane as an antioxidant.

30 parts by mass of the antioxidant polyethylene composition mixture is charged into a strong-blending double-screw extruder having an inner diameter of 58 mm and L/D of 42, and 70 parts by mass of liquid paraffin (50 cst at 40°C) is supplied to the double-screw extruder via a side feeder. Melt-blending is conducted at 210°C and 200 rpm to prepare a polyethylene solution.

The polyethylene solution is extruded from a T-die mounted to a tip end of the double-screw extruder, and drawn and cooled by cooling rolls controlled at 50°C while reeling up, to form a gel-like sheet having a thickness of 1.0 mm. Using a tenter-stretching machine, the gel-like sheet is simultaneously biaxially stretched while exposing the sheet to a temperature of 116°C (a wet stretching), such that the stretching magnification factor is 5 fold in both MD and TD. The stretched gel-like sheet is fixed to an aluminum frame of 20 cm x 20 cm and immersed in a washing bath of methylene chloride controlled at 25°C, and washed with the vibration of 100 rpm for 3 minutes to remove the liquid paraffin.

The washed gel-like sheet is dried by air at room temperature to form a microporous membrane, and simultaneously biaxially re-stretched to 1.5 fold in both MD and TD at 118°C by a batch-stretching machine (dry stretching). Then, thermal relaxation is conducted to the dry-stretched microporous membrane to reduce the membrane's size in both MD and TD to a magnification factor of 1.4 fold based on the membrane's size in MD and TD at the start of dry orientation. In other words, the amount of thermal relaxation is 6.7%. Selected properties of the membrane are shown in Table 1.

### Example 2

A microporous polyethylene membrane is produced in the same manner as in Example 1, except for using 30% by mass of the UHMWPE as a component (A), 55% by mass of the HDPE as a component (B) and 15% by mass of the ethylene-octene copolymer as a component (C).

### Example 3

A microporous polyethylene membrane is produced in the same manner as in Example 1, except for using an ethylene-hexene copolymer, containing an octene comonomer content of 3.7 mol.% and having an Mw of 3.0 x 10⁴, a melting point of 121.4°C and an MWD of 2.5 as a component (C).

### Example 4

A microporous polyethylene membrane is produced in the same manner as in Example 1 except that the gel-like sheet is simultaneously biaxially stretched at 115°C (primary stretching) such that the stretching magnification is 6 fold in both MD and TD directions by using a tenter stretching machine, that the microporous membrane is simultaneously biaxially dry-stretched to 1.8 fold in both MD and TD at 119°C by a batch-stretching machine and that the thermal relaxation is conducted to the to achieve a final magnification factor in MD and TD (based on the membrane's size at the start of dry stretching) of 1.6 fold while exposing the membrane to a temperature of 119°C. In other words, the thermal relaxation results in a reduction in the membrane's Td and MD size of 11.1%.

### Example 5

A microporous polyethylene membrane is produced in the same manner as in Example 1 except that the gel-like sheet is simultaneously biaxially stretched while exposing the membrane to a temperature of 115°C (a primary stretching) such that the stretching magnification is 7 fold in MD and 5 fold in TD, that the microporous membrane is simultaneously biaxially dry-stretched to an MD magnification factor of 1.5 fold and 2.1 fold in TD while exposing the membrane to a temperature of 119°C and that thermal relaxation is conducted to the dry-stretched microporous membrane to a achieve a final magnification factor in MD of 1.4 fold (based on the MD size of the membrane at the start of dry stretching) and a final TD magnification factor of 1.8 fold (based on the TD size of the membrane at the start of dry orientation) while exposing the membrane to a temperature of 119°C. In other words, the thermal relaxation results in an MD size decrease of 6.7% and a TD size decrease of 14.3%.

### Example 6 (Comparative Example)

A microporous polyethylene membrane is produced in the same manner as in Example 1 except for using an HDPE having an Mw of 7.5x 10⁵ and a terminal vinyl group of 0.85 per 10000 carbons as component (B).

### Example 7 (Comparative Example)

A microporous polyethylene membrane is produced in the same manner as in Example 1 except without using the UHMWPE as a component (A) and using 85% by mass of an HDPE having a weight average molecular weight of 5.6 x 10⁵ and a terminal vinyl group of 0.15 per 10000 carbons as component (B).

### Example 8 (Comparative Example)

A microporous polyethylene membrane is produced in the same manner as in Example 1 except that using 10% by mass of an ethylene-octene copolymer having an Mw of 2.0 x 10⁴, an MWD of 5.0 a melting point of 120°C, and containing an octene comonomer content of 8.0 mol.%.

### Example 9

A microporous polyethylene membrane is produced in the same manner as in Example 1 except that the microporous membrane is simultaneously biaxially dry-stretched to a magnification factor of 1.3 fold in both MD and TD and the thermal relaxation is conducted to the dry-stretched microporous membrane to achieve a final magnification factor (based on the size of the membrane at the start of dry orientation) in MD and TD of 1.2 fold. In other words, the thermal relaxation results in an MD and TD size decrease of 7.7%.

### Example 10

A microporous polyethylene membrane is produced in the same manner as in Example 1 except that the thermal relaxation is conducted to the dry-stretched microporous membrane to achieve a final magnification factor in MD and TD of 1.1 fold based on the size of the membrane at the start of dry stretching. In other words, the thermal relaxation results in an MD and TD size decrease of 26.7%.

### Comparative Example 1

100 parts by mass of a polyethylene composition comprising 80% by mass of an HDPE having Mw of 5.6 x 10⁵, a melting point of 135.0°C and a terminal vinyl group of 0.15 per 10000 carbons as component (B) and 20% by mass of an ethylene-hexene copolymer (m-PE) having Mw of 7.0 x 10⁴ (prepared by a single cite catalyst), containing an octene comonomer amount of 1.0 mol.% and having a melting point of 127.0°C and an MWD of 4.2 as component (C) were dry-blended with 0.3 parts by mass of tetrakis[methylene-3-(3,5-ditertiary-butyl-4-hydroxyphenyl)-propionate] methane as an antioxidant.

45 parts by mass of the resultant mixture is charged into a strong-blending double-screw extruder having an inner diameter of 58 mm and L/D of 42, and 55 parts by mass of liquid paraffin (50 cst at 40°C) is supplied to the double-screw extruder via a side feeder. Melt-blending is conducted at 240°C and 200 rpm to prepare a polyethylene solution. The polyethylene solution is extruded from a T-die mounted to a tip end of the double-screw extruder, and drawn and cooled by cooling rolls controlled at 50°C while reeling up, to form a gel-like sheet having a thickness of 1.0 mm. Using a tenter-stretching machine, the gel-like sheet is simultaneously biaxially stretched at 116°C (wet stretching), such that the stretching magnification factor is 7 fold in both MD and TD. The stretched gel-like sheet is fixed to an aluminum frame of 20 cm x 20 cm and immersed in a washing bath of methyl ethyl ketone (MEK) controlled at 25°C, and washed with the vibration of 100 rpm for 3 minutes to remove the liquid paraffin.

The washed gel-like sheet is dried by air at room temperature to form a microporous membrane, and simultaneously biaxially dry-stretched to a magnification factor of 1.3 fold in MD and TD while exposing the membrane to a temperature of 118°C using a batch-stretching machine Then, heat-setting is conducted by exposing the dry-stretched microporous membrane to a temperature 118°C while maintaining the membrane's MD and TD size substantially constant. This Comparative Example is conducted according to the method disclosed in JP2002-338730A.

### Comparative Example 2

A microporous polyethylene membrane is produced in the same manner as in Example 4 except that thermal relaxation is not conducted.

### Comparative Example 3

A microporous polyethylene membrane is produced in the same manner as in Example 1 except that the wet stretching is conducted while exposing the sheet to a temperature of 110°C.

### Comparative Example 4

A microporous polyethylene membrane is produced in the same manner as in Example 1 except that the wet stretching is conducted at a temperature of 127°C.

### Comparative Example 5

A microporous polyethylene membrane is produced in the same manner as in Example 1 except that the microporous membrane is simultaneously biaxially dry-stretched to 3 fold in both MD while exposing the membrane to a temperature of 118°C.

### Comparative Example 6

A microporous polyethylene membrane is produced in the same manner as in Example 1 except that an ethylene-octene copolymer (prepared by a single cite catalyst), containing an octene comonomer content of 15.0 mol.% and having a melting point of 110°C and a MWD of 2.0 is used as a component (C).

The properties of the polyethylene microporous membrane produced in Example 1 to 10 and Comparative Example 1 to 5 were measured as described above. Selected membrane properties are shown in Table 1 and 2. Membrane thickness was measured using a contact thickness meter at a selected MD position. The measurement was conducted at points along the membrane's TD (width) over a distance of 30 cm at 5-mm intervals. The arithmetic mean of the measured values is the sample thickness. Other membrane properties are measured as described above.

**Table 1**

| | | Example 1 | Example 2 | Example 3 | Example 4 | Example 5 | Example 6* | Example 7* | Example 8* | Example 9 | Example 10 |
|---|---|---|---|---|---|---|---|---|---|---|---|
| **PO composition** | | | | | | | | | | | |
| First PE | Mw | 1.95 x 10⁶ | 1.95x 10⁶ | 1.95 x 10⁶ | 1.95 x 10⁶ | 1.95 x 10⁶ | 1.95 x 10⁶ | NA | 1.95 x 10⁶ | 1.95 x 10⁶ | 1.95 x 10⁶ |
| | % by mass | 30 | 30 | 30 | 25 | 30 | 30 | NA | 30 | 30 | 30 |
| Second PE | Mw | 5.6x 10⁵ | 5.6x 10⁵ | 5.6 x 10⁵ | 5.6 x 10⁵ | 5.6 x 10⁵ | 7.5 x 10⁵ | 5.6 x 10⁵ | 5.6 x 10⁵ | 5.6 x 10⁵ | 5.6 x 10⁵ |
| | % by mass | 57 | 55 | 57 | 65 | 57 | 57 | 85 | 57 | 57 | 57 |
| | Terminal vinyl content (per 10,000 carbons) Melting point (°C) | 0.15 | 0.15 | 0.15 | 0.15 | 0.15 | 0.85 | 0.15 | 0.15 | 0.15 | 0.15 |
| | | 135.0 | 135.0 | 135.0 | 135.0 | 135.0 | 135.0 | 135.0 | 135.0 | 135.0 | 135.0 |
| Third PE | Mw | 2.0x10⁴ | 2.0 x 10⁴ | 3.0 x 10⁴ | 2.0x10⁴ | 2.0 x 10⁴ | 2.0 x 10⁴ | 2.0 x 10⁴ | 2.0 x 10⁴ | 2.0 x 10⁴ | 2.0 x 10⁴ |
| | Mw/Mn | 2.0 | 2.0 | 2.5 | 2.0 | 2.0 | 2.0 | 2.0 | 5.0 | 2.0 | 2.0 |
| | % by mass | 13 | 15 | 13 | 10 | 13 | 13 | 15 | 13 | 13 | 13 |
| | Kind of comonomer | octene | octene | hexene | octene | octene | octene | octene | octene | octene | octene |
| | Comonomer content (mol.%) | 4.0 | 4.0 | 3.7 | 4.0 | 4.0 | 4.0 | 4.0 | 4.0 | 4.0 | 4.0 |
| | Melting point (°C) | 120.0 | 120.0 | 121.4 | 120.0 | 120.0 | 120.0 | 120.0 | 120.0 | 120.0 | 120.0 |

| **Production Conditions** | | | | | | | | | | | |
|---|---|---|---|---|---|---|---|---|---|---|---|
| PE concentration (% by mass) | | 30 | 30 | 30 | 30 | 30 | 30 | 30 | 30 | 30 | 30 |
| Wet stretching | | | | | | | | | | | |
| Temperature (°C) | | 116 | 116 | 116 | 115 | 115 | 116 | 116 | 115 | 116 | 116 |
| Magnification (MD x TD) | | 5 x 5 | 5 x 5 | 5 x 5 | 6 x 6 | 7 x 7 | 5 x 5 | 5 x 5 | 7 x 7 | 5x5 | 5x5 |
| Dry stretching | | | | | | | | | | | |
| Temperature (°C) | | 118 | 118 | 118 | 119 | 119 | 118 | 118 | 119 | 118 | 118 |
| Magnification (MD x TD) | | 1.5 x 1.5 | 1.5 x 1.5 | 1.5 x 1.5 | 1.8 x 1.8 | 1.5 x 1.5 | 1.5 x 1.5 | 1.5 x 1.5 | 1.5 x 1.5 | 1.3 x 1.3 | 1.5 x 1.5 |
| Thermal relaxation | | | | | | | | | | | |
| Temperature (°C) | | 118 | 118 | 118 | 119 | 119 | 118 | 118 | 119 | 118 | 118 |
| Magnification based on membrane's size before dry stretching (MD x TD) | | 1.4 x 1.4 | 1.4 x 1.4 | 1.4 x 1.4 | 1.6 x 1.6 | 1.4 x 1.4 | 1.4 x 1.4 | 1.4 x 1.4 | 1.4 x 1.4 | 1.2 x 1.2 | 1.1 x 1.1 |
| Heat-setting | | | | | | | | | | | |
| Temperature (°C) | | NA | NA | NA | NA | NA | NA | NA | NA | NA | NA |

| **Physical property** | | | | | | | | | | | |
|---|---|---|---|---|---|---|---|---|---|---|---|
| Average Thickness (µm) | | 24 | 24 | 23 | 25 | 24 | 24 | 24 | 24 | 23 | 25 |
| Air Permeability (sec/100 cm³/20 µm) | | 720 | 740 | 745 | 650 | 510 | 890 | 450 | 630 | 470 | 400 |
| Porosity (%) | | 38 | 37 | 37 | 42 | 42 | 36 | 47 | 39 | 42 | 44 |
| Pin Puncture Strength (N/25 µm) | | 6.1 | 6.0 | 6.3 | 7.0 | 7.7 | 6.3 | 4.6 | 6.0 | 4.5 | 5.0 |
| Max. Shrinkage Ratio %)(MD/TD) (in a solid state) | | 18.1/19.0 | 17.8/18.5 | 18.4/19.2 | 20.1/21.4 | 24.1/23.1 | 19.0/20.1 | 23.1/24.5 | 25.0/26.1 | 11.4/13.0 | 15.2/16.4 |
| Shutdown Temperature (°C) | | 122.0 | 123.0 | 122.5 | 124.5 | 124.0 | 122.0 | 121.2 | 121.3 | 122.0 | 120.4 |
| Shutdown Speed (sec/100 cm³/°C) | | 11,000 | 11,540 | 11,100 | 10,300 | 11,500 | 9,700 | 12,500 | 9,200 | 11,000 | 11,400 |

| | | | | | | | | | | | |
|---|---|---|---|---|---|---|---|---|---|---|---|
| * Examples 6-8 are comparative examples | | | | | | | | | | | |

**Table 2**

| | | Comparative Example 1 | Comparative Example 2 | Comparative Example 3 | Comparative Example 4 | Comparative Example 5 | Comparative Example 6 |
|---|---|---|---|---|---|---|---|
| **PO composition** | | | | | | | |
| First PE | Mw | NA | 1.95 x 10⁶ | 1.95 x 10⁶ | 1.95 x 10⁶ | 1.95 x 10⁶ | 1.95 x 10⁶ |
| | % by mass | NA | 30 | 30 | 30 | 30 | 30 |
| Second PE | Mw | 5.6 x 10⁵ | 5.6 x 10⁵ | 5.6 x 10⁵ | 5.6 x 10⁵ | 5.6 x 10⁵ | 5.6 x 10⁵ |
| | % by mass | 80 | 57 | 57 | 57 | 57 | 57 |
| | Terminal vinyl content (per 10,000 carbons) | 0.15 | 0.15 | 0.15 | 0.15 | 0.15 | 0.15 |
| | Melting point (°C) | 135.0 | 135.0 | 135.0 | 135.0 | 135.0 | 135.0 |
| Third PE | Mw | 7.0 x 10⁴ | 2.0 x 10⁴ | 3.0 x 10⁴ | 2.0 x 10⁴ | 2.0 x 10⁴ | 2.0 x 10⁴ |
| | Mw/Mn | 4.2 | 2.0 | 2.5 | 2.0 | 2.0 | 2.0 |
| | % by mass | 13 | 13 | 13 | 13 | 13 | 13 |
| | Kind of comonomer | Octene | Octene | Octene | Octene | Octene | Octene |
| | Comonomer content (mol.%) | 1.0 | 4.0 | 4.0 | 4.0 | 4.0 | 4.0 |
| | Melting point (°C) | 127.0 | 120.0 | 121.4 | 120.0 | 120.0 | 120.0 |

| **Production Conditions** | | | | | | | |
|---|---|---|---|---|---|---|---|
| PE concentration (% by mass) | | 45 | 30 | 30 | 30 | 30 | 30 |
| Wet stretching | | | | | | | |
| Temperature (°C) | | 116 | 116 | 110 | 127 | 115 | 115 |
| Magnification (MD x TD) | | 7x7 | 5 x 5 | 5 x 5 | 5x5 | 7 x7 | 7x7 |
| Dry stretching | | | | | | | |
| Temperature (°C) | | 118 | 118 | 118 | 118 | 118 | 118 |
| Magnification (MD x TD) | | 1.3 x 1.3 | 1.8 x 1.8 | 1.5 x 1.5 | 1.5 x 1.5 | 1.4 x 1.4 | 1.4 x 1.4 |
| Thermal relaxation | | | | | | | |
| Temperature (°C) | | NA | NA | 118 | 118 | 119 | 118 |
| Magnification based on membrane's size before dry stretching (MD x TD) | | NA | NA | 1.4 x 1.4 | 1.4 x 1.4 | 1.4 x 1.4 | 1.4 x 1.4 |
| Heat-setting | | | | | | | |
| Temperature (°C) | | 118 | NA | NA | NA | NA | NA |

| **Physical property** | | | | | | | |
|---|---|---|---|---|---|---|---|
| Average Thickness (µm) | | 25 | 25 | 24 | 24 | 24 | 24 |
| Air Permeability (sec/100 cm³/20 µm) | | 350 | 420 | 660 | 1050 | 470 | 820 |
| Porosity (%) | | 40 | 43 | 39 | 30 | 40 | 38 |
| Pin Puncture Strength (N/25 µm) | | 4.9 | 6.4 | 7.0 | 3.5 | 7.5 | 5.2 |
| Max.Shrinkage Ratio (%)(MD/TD) (in a solid state) | | 38.7/32.5 | 30.2/31.4 | 31.4/32.5 | 9.7/11.2 | 35.3/36.2 | 32.4/33.3 |
| Shutdown Temperature (°C) | | 129.5 | 126.3 | 123.5 | 130.5 | 131.0 | 113.0 |
| Shutdown Speed (sec/100 cm³/°C) | | 11,400 | 12,200 | 11,400 | 12,700 | 12,500 | 9,600 |

Table 1 shows that the microporous membrane of Examples 1 to 10 has both a relatively low heat shrinkage ratio and a relatively low shutdown temperature in the range of 120°C to 130°C. Furthermore, Table 1 shows that the polyethylene microporous membrane of Examples 1 to 5 has a relatively high shutdown speed and a relatively high pin puncture strength. The microporous membrane of Examples 1 to 5 corresponds to the first embodiment, as described above. Table 2 shows the polyethylene microporous membrane of Comparative Examples of 1 to 6. Comparative Example 1 has a relatively high heat shrinkage ratio, because, it is believed, the third polyethylene has a higher melting point and a relatively broad MWD. Furthermore, Comparative Example 1 has a lower pin puncture strength, because, it is believed, the membrane does not contain UHMWPE. Comparative Example 2 had a high heat shrinkage ratio, because a heat-relaxing step (annealing) is omitted. It is believed that Comparative Example 3 exhibits a relatively high heat shrinkage ratio because the wet stretching temperature is too low. It is believed that Comparative Example 4 exhibits a relatively high shutdown temperature and a relatively low permeability because the wet stretching temperature is too high. It is believed that Comparative Example 5 exhibits a relatively high shutdown temperature and a relatively high heat shrinkage ratio because the dry-stretching magnification factor is too large. It is believed that Comparative Example 6 exhibits a relatively large high heat shrinkage ratio because the third polyethylene has too low a low melting point.

The following examples are produced by the method described in relation to the second embodiment.

### Example 11 (Reference Example)

100 parts by mass of a polyethylene (PE) composition comprising 30% by mass of an UHMWPE having an Mw of 1.95 x 10⁶ as a component (A), 57% by mass of an HDPE having an Mw of 5.6 x 10⁵, a melting point of 135.0°C, and a terminal vinyl group content of 0.15 per 10000 carbons as a component (B); and 13% by mass of an ethylene-octene copolymer (m-PE) prepared by a single cite catalyst, containing an octene comonomer amount of 8.0 mol.%, having Mw of 2.0 x 10⁴, and having a melting point of 120°C, and an MWD of 2.0 as a component (C) were dry-blended with 0.375 parts by mass of tetrakis[methylene-3-(3,5-ditertiary-butyl-4-hydroxyphenyl)-propionate] methane as an antioxidant.

30 parts by mass of the resultant mixture is charged into a strong-blending double-screw extruder having an inner diameter of 58 mm and L/D of 42, and 70 parts by mass of liquid paraffin (50 cst at 40°C) is supplied to the double-screw extruder via a side feeder. Melt-blending is conducted at 210°C and 200 rpm to prepare a polyethylene solution.

The polyethylene solution is extruded from a T-die mounted to a tip end of the double-screw extruder, and drawn and cooled by cooling rolls controlled at 50°C while reeling up, to form a gel-like sheet having a thickness of 1.0 mm. Using a tenter-stretching machine, the gel-like sheet is simultaneously biaxially stretched while exposing the sheet to a temperature of 80°C (a primary wet stretching), to achieve a primary wet stretching magnification factor of 2 fold in both MD and TD. The sheet is then simultaneously biaxially stretched while exposing the sheet to a temperature of 116°C (secondary wet stretching), to achieve a secondary wet stretching magnification factor of 3.5 fold in both MD and TD. The total magnification factor at the end of primary and secondary wet stretching is 49 fold. The stretched gel-like sheet is fixed to an aluminum frame of 20 cm x 20 cm and immersed in a washing bath of methylene chloride controlled at 25°C, and washed with a vibration of 100 rpm for 3 minutes to remove the liquid paraffin.

The washed gel-like sheet was dried by air at room temperature to form a microporous membrane, and simultaneously biaxially dry-stretched to a magnification factor of 2.0 fold in both MD and TD while exposing the membrane to a temperature of 120°. Then, thermal relaxation is conducted to the dry-stretched microporous membrane to achieve a final TD and MD magnification factor of 1.4 fold (based on the size of the membrane at the start of dry stretching) while exposing the membrane to a temperature of 122°C. In other words, the thermal relaxation results in an MD and TD size decrease of 30 % in both MD and TD.

### Example 12 (Comparative Example)

A microporous polyethylene membrane is produced in the same manner as in Example 11, except for using HDPE having Mw of 7.46 x 10⁵ and a terminal vinyl group content of 0.88 per 10000 carbons as a component (B).

### Example 13 (Reference Example)

A microporous polyethylene membrane is produced in the same manner as in Example 11, except that the gel-like sheet is simultaneously biaxially stretched while exposed to a temperature of 85°C during primary wet stretching, the primary wet stretching magnification factor is 3.5 fold in both MD and TD, and then secondary wet stretching is conducted while exposing the sheet to a temperature of 114°C to achieve a secondary wet stretching magnification factor of 2 fold in both MD and TD.

### Example 14 (Reference Example)

A microporous polyethylene membrane is produced in the same manner as in Example 11, except that the microporous membrane is biaxially dry-stretched to a magnification factor of 1.7 fold in both MD and TD while exposing the membrane to a temperature of 118°C by a batch-stretching machine (dry-stretching) and then conducting thermal relaxation of the dry-stretched microporous membrane to achieve a final magnification factor of 1.4 fold in MD and TD while exposing the membrane to a temperature of 122°C. In other words, the thermal relaxation results in an MD and TD size decrease of 17.6 %.

### Example 15 (Reference Example)

A microporous polyethylene membrane is produced in the same manner as in Example 11, except that the gel-like sheet is simultaneously biaxially stretched while exposing the sheet to a temperature of 80°C (primary wet stretching), such that the stretching magnification is 2.5 fold in both MD and TD, and then simultaneously biaxially stretching the sheet (secondary wet stretching) while exposing the sheet to a temperature of 116°C to achieve a secondary stretching magnification factor of 2 fold in both MD and TD. The membrane is simultaneously biaxially dry-stretched to a magnification factor of 1.5 fold in both MD and TD while exposing the membrane to a temperature of 120°C by a batch-stretching, and then the membrane is exposed to a temperature of 121°C while maintaining the MD and TD size of the membrane substantially constant to heat set the membrane. No thermal relaxation was used.

### Example 16 (Reference Example)

A microporous polyethylene membrane is produced in the same manner as in Example 11, except that the primary wet stretching is not conducted.

### Example 17 (Comparative Example)

A microporous polyethylene membrane is produced in the same manner as in Example 11, except that component A (UHMWPE) was omitted and using 87% by mass of an HDPE having an Mw of 3.0x 10⁵ and a terminal vinyl group content of 0.15 per 10000 carbons as a component (B).

### Example 18 (Reference Example)

A microporous polyethylene membrane is produced in the same manner as in Example 11 except that the microporous membrane is simultaneously biaxially dry-stretched to 1.3 fold in both MD and TD by using a tenter stretching machine (dry-stretching) and then subjecting the membrane to thermal relaxation to achieve a final MD and TD magnification factor of 1.2 fold, based on the size of the membrane at the start of dry stretching. In other words, the thermal relaxation results in an MD and TD size decrease of 7.7%.

### Comparative Example 7

A microporous polyethylene membrane is produced in the same manner as in Example 11, except that the gel-like sheet is simultaneously biaxially stretched at 80°C (primary wet stretching) to achieve a primary wet stretching magnification of 2 fold in both MD and TD, and then simultaneously biaxially stretched while exposing the sheet to a temperature of 116°C (wet secondary stretching) to achieve a secondary wet stretching magnification of 4 fold in both MD and TD.

### Comparative Example 8

A microporous polyethylene membrane is produced in the same manner as in Example 11, except component (B) (HDPE) is omitted and for using 30% by mass of UHMWPE as a component (A) and 70% by mass of m-PE as a component (C).

### Comparative Example 9

A microporous polyethylene membrane is produced in the same manner as in Example 16 except that the microporous membrane is simultaneously biaxially dry-stretched to a magnification factor of 3 fold in both MD and TD while exposing the membrane to a temperature of 118°C.

### Comparative Example 10

A microporous polyethylene membrane is produced in the same manner as in Example 16 except that neither thermal relaxation nor heat-setting is conducted.

The properties of the polyethylene microporous membrane produced in Example 11 to 18 and Comparative Example 7 to 10 were measured by the above-described methods. Selected properties of the polyethylene microporous membrane are shown in Table 3 and 4.

**Table 3**

| | | Example 11 | Example 12* | Example 13 | Example 14 | Example 15 | Example 16 | Example [7* | Example 18 |
|---|---|---|---|---|---|---|---|---|---|
| **PO composition** | | | | | | | | | |
| First PE | Mw | 1.95 x 10⁶ | 1.95x 10⁶ | 1.95 x 10⁶ | 1.95 x 10⁶ | 1.95 x 10⁶ | 1.95 x 10⁶ | NA | 1.95 x 10⁶ |
| | % by mass | 30 | 30 | 30 | 30 | 30 | 30 | NA | 30 |
| Second PE | Mw | 5.6x 10⁵ | 7.5 x 10⁵ | 5.6 x 10⁵ | 5.6 x 10⁵ | 5.6 x 10⁵ | 7.5 x 10⁵ | 5.6 x 10⁵ | 5.6 x 10⁵ |
| | % by mass | 57 | 57 | 57 | 57 | 57 | 57 | 87 | 57 |
| | Terminal vinyl content (per 10,000 carbons) | 0.15 | 0.88 | 0.15 | 0.15 | 0.15 | 0.85 | 0.15 | 0.15 |
| | Melting point (°C) | 135.0 | 135.0 | 135.0 | 135.0 | 135.0 | 135.0 | 135.0 | 135.0 |
| Third PE | Mw | 2.0 x 10⁴ | 2.0 x 10⁴ | 2.0 x 10⁴ | 2.0 x 10⁴ | 2.0 x 10⁴ | 2.0 x 10⁴ | 2.0 x 10⁴ | 2.0x10⁴ |
| | Mw/Mn | 2.0 | 2.0 | 2.0 | 2.5 | 2.0 | 2.0 | 2.0 | 5.0 |
| | % by mass | 13 | 15 | 13 | 13 | 13 | 13 | 13 | 13 |
| | Kind of comonomer | octene | octene | octene | octene | octene | octene | octene | octene |
| | Comonomer content (mol.%) | 4.0 | 4.0 | 4.0 | 4.0 | 8.0 | 8.0 | 8.0 | 8.0 |
| | Melting point (°C) | 120.0 | 120.0 | 120.0 | 120.0 | 120.0 | 120.0 | 120.0 | 120.0 |

| **Production Conditions** | | | | | | | | | |
|---|---|---|---|---|---|---|---|---|---|
| PE concentration (% by mass) | | 30 | 30 | 30 | 30 | 30 | 30 | 30 | 30 |
| Primary Wet stretching | | | | | | | | | |
| Temperature (°C) | | 80 | 80 | 85 | 80 | 80 | NA | 80 | 80 |
| Magnification (MD x TD) | | 2 x 2 | 2 x 2 | 3.5 x 3.5 | 2 x 2 | 2 x 2 | NA | 2 x 2 | 2 x 2 |
| Secondary Wet stretching | | | | | | | | | |
| Temperature (°C) | | 116 | 116 | 114 | 116 | 116 | 116 | 116 | 116 |
| Magnification (MD x TD) | | 3.5 x 3.5 | 3.5 x 3.5 | 2 x 2 | 3.5 x 3.5 | 3.5 x 3.5 | 3.5 x 3.5 | 3.5 x 3.5 | 3.5 x 3.5 |
| Dry stretching | | | | | | | | | |
| Temperature (°C) | | 120 | 120 | 120 | 118 | 120 | 120 | 120 | 120 |
| Magnification (MD x TD) | | 2.0 x 2.0 | 2.0 x 2.0 | 2.0 x 2.0 | 1.7 x 1.7 | 1.5 x 1.5 | 2.0 x 2.0 | 2.0 x 2.0 | 1.3 x 1.3 |
| Thermal relaxation | | | | | | | | | |
| Temperature (°C) | | 122 | 122 | 122 | 122 | NA | 122 | 122 | 122 |
| Magnification based on membrane's size before dry stretching (MD x TD) | | 1.4 x 1.4 | 1.4 x 1.4 | 1.4 x 1.4 | 1.4 x 1.4 | NA | 1.4 x 1.4 | 1.4 x 1.4 | 1.2 x 1.2 |
| Heat-setting | | | | | | | | | |
| Temperature (°C) | | NA | NA | NA | NA | 121 | NA | NA | NA |

| **Physical property** | | | | | | | | | |
|---|---|---|---|---|---|---|---|---|---|
| Average Thickness (µm) | | 24 | 24 | 23 | 25 | 24 | 25 | 24 | 24 |
| Air Permeability (sec/100 cm³/20 µm) | | 210 | 280 | 185 | 310 | 200 | 870 | 190 | 620 |
| Porosity (%) | | 48 | 46 | 49 | 46 | 49 | 32 | 49 | 42 |
| Pin Puncture Strength (N/25 µm) | | 6.7 | 6.6 | 6.2 | 6.7 | 6.9 | 4.5 | 4.9 | 6.2 |
| Maximum Shrinkage Ratio (%)(MD/TD) (in a solid state) | | 20.0/20.9 | 21.1/22.0 | 28.2/29.1 | 22.4/23.2 | 25.4/26.3 | 19.8/20.1 | 18.0/19.2 | 14.2/15.5 |
| Shutdown Temperature (°C) | | 123.0 | 122.4 | 124.0 | 123.5 | 123.5 | 120.0 | 121.0 | 121.5 |

| | | | | | | | | | |
|---|---|---|---|---|---|---|---|---|---|
| * Examples 12 and 17 are comparative examples | | | | | | | | | |

**Table 4**

| | | Comparative Example 7 | Comparative Example 8 | Comparative Example 9 | Comparative Example 10 |
|---|---|---|---|---|---|
| **PO composition** | | | | | |
| First PE | Mw | 1.95 x 10⁶ | 1.95x 10⁶ | 1.95 x 10⁶ | 1.95 x 10⁶ |
| | % by mass | 30 | 30 | 30 | 30 |
| Second PE | Mw | 5.6x 10⁵ | NA | 5.6 x 10⁵ | 5.6 x 10⁵ |
| | % by mass | 57 | NA | 57 | 57 |
| | Terminal vinyl content (per 10,000 carbons) | 0.15 | NA | 0.15 | 0.15 |
| | Melting point (°C) | 135.0 | NA | 135.0 | 135.0 |
| Third PE | Mw | 2.0 x 10⁴ | 2.0 x 10⁴ | 2.0 x 10⁴ | 2.0 x 10⁴ |
| | Mw/Mn | 2.0 | 2.0 | 2.0 | 2.0 |
| | % by mass | 13 | 70 | 13 | 13 |
| | Kind of comonomer | octene | octene | octene | octene |
| | Comonomer content (mol.%) | 4.0 | 4.0 | 4.0 | 4.0 |
| | Melting point (°C) | 120.0 | 120.0 | 120.0 | 120.0 |

| **Production Conditions** | | | | | |
|---|---|---|---|---|---|
| PE concentration (% by mass) | | 30 | 30 | 30 | 30 |
| Primary Wet stretching | | | | | |
| Temperature (°C) | | 80 | 80 | 80 | 80 |
| Magnification (MD x TD) | | 2 x 2 | 2 x 2 | 2 x 2 | 2 x 2 |
| Secondary Wet stretching | | | | | |
| Temperature (°C) | | 116 | 116 | 116 | 116 |
| Magnification (MD x TD) | | 4 x 4 | 3.5 x 3.5 | 3.5 x 3.5 | 3.5 x 3.5 |
| Dry stretching | | | | | |
| Temperature (°C) | | 120 | 120 | 118 | 120 |
| Magnification (MD x TD) | | 2.0 x 2.0 | 2.0 x 2.0 | 3.0 x 3.0 | 2.0 x 2.0 |
| Thermal relaxation | | | | | |
| Temperature (°C) | | 122 | 122 | 122 | NA |
| Magnification based on membrane's size before dry stretching (MD x TD) | | 1.4 x 1.4 | 1.4 x 1.4 | 1.4 x 1.4 | NA |
| Heat-setting | | | | | |
| Temperature (°C) | | NA | NA | NA | NA |

| **Physical property** | | | | | |
|---|---|---|---|---|---|
| Average Thickness (µm) | | 24 | 24 | 24 | 22 |
| Air Permeability (sec/100 cm³/20 µm) | | 190 | 1100 | 180 | 200 |
| Porosity (%) | | 48 | 29 | 48 | 47 |
| Pin Puncture Strength (N/25 µm) | | 7.7 | 3.9 | 7.1 | 6.3 |
| Maximum Shrinkage Ratio (%)(MD/TD) (in a solid state) | | 35.1/36.2 | 30.2/31.1 | 40.0/41.2 | 35.0/36.1 |
| Shutdown Temperature (°C) | | 131.0 | 120.2 | 129.0 | 124.0 |

Table 3 shows that the polyethylene microporous membrane of Examples 11 to 18 has a relatively low heat shrinkage ratio and a shutdown temperature in the range of 120°C to 130°C. Furthermore, Table 3 shows that the polyethylene microporous membrane of Examples 11 to 15 have a relatively high pin puncture strength, improved air permeability and relatively low heat shrinkage.

Table 4 shows the microporous membrane of Comparative Examples of 7 to 10. It is believed that the microporous membrane of Comparative Example 7 has a relatively high shrinkage ratio and relatively high shutdown temperature because the total wet stretching magnification (64 fold) is > 60 fold. It is believed that the microporous membrane of Comparative Example 8 has a relatively high heat shrinkage because it does not contain HDPE, and because the content of the third polyethylene is > 30% by mass. It is believed that the microporous membrane of Comparative Example 9 has a relatively high shrinkage ratio because the magnification of re-stretching is too large. It is believed that the microporous membrane of Comparative Example 10 has a relatively large heat shrinkage ratio because neither thermal relaxation nor heat-setting step is conducted.

When numerical lower limits and numerical upper limits are listed herein, ranges from any lower limit to any upper limit are contemplated.

## Claims

1. A microporous membrane comprising a first polyethylene in an amount in the range of from 5 wt.% to 40 wt.% having an Mw ≥ 1.0 × 10⁶; a second polyethylene in an amount in the range of from 5 wt.% to 90 wt.% having an Mw in the range of 1.0 × 10⁵ to 0.95 × 10⁶, a Tm > 127.0°C and a terminal vinyl group content ≤ 0.20 per 10,000 carbons; and a third polyethylene in an amount in the range of from 5 wt.% to 30 wt.% being an ethylene-alpha-olefin copolymer having an Mw in the range of 1.0 × 10⁴ to 5.0 × 10⁵ and having a Tm in the range of 115.0°C to 127.0°C; the weight percentages being based on the weight of the membrane, wherein the membrane has a shutdown temperature ≤ 130.0°C, a shutdown speed ≥ 10000.0 sec/100cm³/°C and a maximum solid state heat shrinkage ≤ 30.0%; the shutdown temperature, shutdown speed, and maximum solid state heat shrinkage being measured according to the procedures set out in the description, and Tm being measured in accordance with JIS K7122.

2. The microporous membrane of claim 1, wherein the membrane has a maximum solid state heat shrinkage ≤ 25.0%, a shut-down speed ≥ 10000.0 sec/100cm³/°C, and a pin puncture strength ≥ 5.0 N/25µm, wherein the pin puncture strength is measured according to the procedure set out in the description.

3. The microporous membrane of claims 1 or 2, wherein the membrane has an air permeability in the range of 50.0 sec/100cm³/20µm to 500.0 sec/100cm³/20µm, wherein the air permeability is measured according to JIS 8117.

4. A battery separator film comprising the microporous membrane of any preceding claim.

## Patentansprüche

1. Mikroporöse Membran, umfassend ein erstes Polyethylen mit einem Mw ≥ 1,0 x 10⁶ in einer Menge im Bereich von 5 Gew.-% bis 40 Gew.-%, ein zweites Polyethylen mit einem Mw im Bereich von 1,0 x 10⁵ bis 0,95 x 10⁶, einer Tm > 127,0 °C und einem Gehalt an endständigen Vinylgruppen ≤ 0,20 pro 10.000 Kohlenstoffatomen in einer Menge im Bereich von 5 Gew.-% bis 90 Gew.-%; und ein drittes Polyethylen in einer Menge im Bereich von 5 Gew.-% bis 30 Gew.-%, das ein Ethylen-α-Olefin-Copolymer mit einem Mw im Bereich von 1,0 x 10⁴ bis 5,0 x 10⁵ und einer Tm im Bereich von 115 °C bis 127,0 °C ist; wobei die Gewichtsprozentsätze auf das Gewicht der Membran bezogen sind, wobei die Membran eine Abriegeltemperatur ≤ 130,0 °C, eine Abriegelgeschwindigkeit ≥ 10000,0 s/100 cm³/°C und eine maximale Wärmeschrumpfung im festen Zustand von ≤ 30,0 % aufweist, wobei die Abriegeltemperatur, die Abriegelgeschwindigkeit und die maximale Wärmeschrumpfung im festen Zustand gemäß den in der Beschreibung dargelegten Verfahren gemessen werden und die Tm gemäß JIS K7122 gemessen wird.

2. Mikroporöse Membran nach Anspruch 1, wobei die Membran eine maximale Wärmeschrumpfung im festen Zustand ≤ 25,0 %, eine Abriegelgeschwindigkeit ≥ 10000,0 s/100 cm³/°C und eine Dorn-Durchschlagfestigkeit ≥ 5,0 N/25 µm aufweist, wobei die Dorn-Durchschlagfestigkeit gemäß dem in der Beschreibung dargelegten Verfahren gemessen wird.

3. Mikroporöse Membran nach Anspruch 1 oder 2, wobei die Membran eine Luftdurchlässigkeit im Bereich von 50,0 s/100 cm³/20 µm bis 500,0 s/100 cm³/20 µm aufweist, wobei die Luftdurchlässigkeit gemäß JIS 8117 gemessen wird.

4. Batterieseparatorfolie, die die mikroporöse Membran nach einem der vorangegangenen Ansprüche umfasst.

## Revendications

1. Membrane microporeuse comprenant un premier polyéthylène en une quantité située dans la plage allant de 5 % en poids à 40 % en poids ayant une Mw > 1,0 x 10⁶ ; un deuxième polyéthylène en une quantité située dans la plage allant de 5 % en poids à 90 % en poids ayant une Mw située dans la plage allant de 1,0 x 10⁵ à 0,95 x 10⁶, un Tm > 127,0°C et une teneur en groupes vinyle terminaux ≤ 0,20 pour 10 000 carbones ; et un troisième polyéthylène en une quantité située dans la plage allant de 5 % en poids à 30 % en poids qui est un copolymère d'éthylène-alpha-oléfine ayant une Mw située dans la plage allant de 1,0 x 10⁴ à 5,0 x 10⁵ et ayant un Tm situé dans la plage allant de 115,0°C à 127,0°C ; les pourcentages en poids étant basés sur le poids de la membrane, laquelle membrane a une température de coupure ≤ 130,0°C, une vitesse d'arrêt ≥ 10000,0 s/100 cm³/°C et un retrait thermique à l'état solide maximal ≤ 30,0 % ; la température de coupure, la vitesse de coupure et le retrait thermique à l'état solide maximal étant mesurés conformément aux procédures indiquées dans la description, et le Tm étant mesuré conformément à la norme JIS K7122.

2. Membrane microporeuse selon la revendication 1, laquelle membrane a un retrait thermique à l'état solide maximal ≤ 25,0 %, une vitesse de coupure ≥ 10000,0 s/100 cm³/°C, et une résistance aux piqûres d'épingle ≥ 5,0 N/25 µm, dans laquelle la résistance aux piqûres d'épingle est mesurée conformément à la procédure indiquée dans la description.

3. Membrane microporeuse selon la revendication 1 ou 2, laquelle membrane a une perméabilité à l'air située dans la plage allant de 50,0 s/100 cm³/20 µm à 500,0 s/100 cm³/20 µm, dans laquelle la perméabilité à l'air est mesurée conformément à la norme JIS 8117.

4. Film séparateur de batterie comprenant la membrane microporeuse de l'une quelconque des revendications précédentes.
